# EUROPEAN PATENT APPLICATION

(11) **EP 1 139 445 A1**
(43) Date of publication of application: **04.10.2001**
(21) Application number: 00106991.3
(22) Date of filing: 01.04.2000
(51) Int. Cl.: H01L 41/04, F02D 41/20, F02D 41/22, F02M 59/46

(54) **Method and apparatus for diagnosing a fault in a system utilizing a piezoelectric element**

(71) Applicant: Robert Bosch GmbH, 70469 Stuttgart (DE)
(72) Inventor: Rueger, Johannes-Joerg, 71665 Vaihingen/Enz (DE); Sugg, Bertram, 70839 Gerlingen (DE); Schulz, Udo, 71665 Vaihingen/Enz (DE)
(74) Representative: Dreiss, Fuhlendorf, Steimle & Becker

(57) **Abstract**

A method and an apparatus for diagnosing a fault in a system utilizing a piezoelectric element are described. The system is preferably a fuel injection system. The method is characterized in that piezoelectric elements are used as detectors of a fault in the system such as a stuck injector needle. The apparatus is characterized in that detectors in the system are implemented as piezoelectric elements. Preferably, the piezoelectric elements are used as actuators in fuel injection nozzles and the same piezoelectric elements are utilized as detectors of a possible fault.

## Description

The present invention concerns a method as defined in the preamble of claim 1 and an apparatus as defined in the preamble of claim 10, i.e., a method and an apparatus for diagnosing a fault in a system using a piezoelectric element, more specifically, a fuel injection system using a piezoelectric element.

Fuel injection systems are essential components of combustion engines. They may be implemented either with individual or with shared fuel supply lines for each fuel injection nozzle (the second alternative is also referred to as common rail systems, or "CR systems"). In each case, fuel injections are controlled by means of opening and closing fuel injection nozzles in a predefined way.

As an example, piezoelectric elements may be used as actuators in fuel injection nozzles (in particular in common rail injectors) of a combustion engine. In this example, fuel injection is controlled by means of applying voltages to piezoelectric actuators which expand or contract themselves as a function of the voltage applied. Resulting thereof, an injector needle which is connected to the piezoelectric actuators by means of a transfer system is moved up and down and therefore an injection nozzle is opened and closed.

The use of piezoelectric elements as actuators proves to be advantageous, inter alia, in fuel injection nozzles for internal combustion engines. See references EP 0 371 469 B1 and EP 0 379 182 B1, incorporated herein by reference, regarding the usability of piezoelectric elements in fuel injection nozzles.

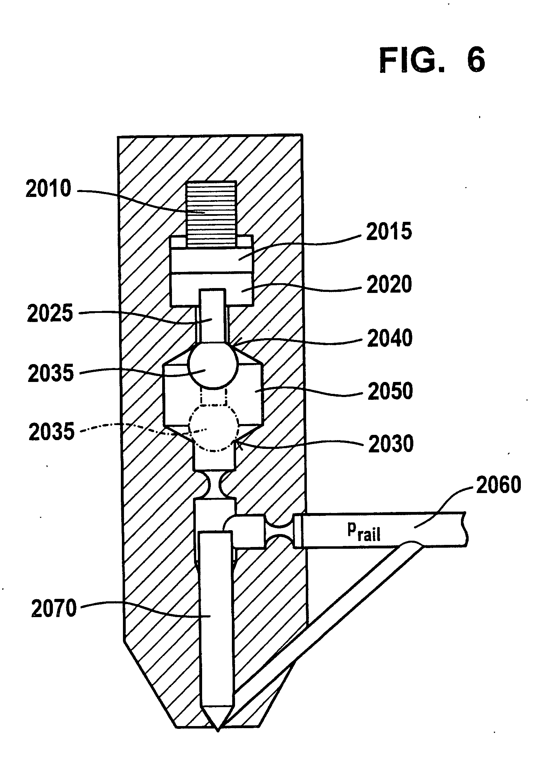

Fig. 6 is a schematic representation of a fuel injection system using a piezoelectric element 2010 as an actuator. Referring to Fig. 6, the piezoelectric element 2010 is electrically energized to expand and contract in response to a given activation voltage. The piezoelectric element 2010 is coupled to a piston 2015. In the expanded state, the piezoelectric element 2010 causes the piston 2015 to protrude into a hydraulic adapter 2020 which contains a hydraulic fluid, for example fuel. As a result of the piezoelectric element's expansion, a double acting control valve 2025 is hydraulically pushed away from hydraulic adapter 2020 and the valve plug 2035 is extended away from a first closed position 2040. The combination of double acting control valve 2025 and hollow bore 2050 is often referred to as double acting, double seat valve for the reason that when piezoelectric element 2010 is in an unexcited state, the double acting control valve 2025 rests in its first closed position 2040. On the other hand, when the piezoelectric element 2010 is fully extended, it rests in its second closed position 2030. The later position of valve plug 2035 is schematically represented with ghost lines in Fig. 6.

The fuel injection system comprises an injection needle 2070 allowing for injection of fuel from a pressurized fuel supply line 2060 into the cylinder (not shown). When the piezoelectric element 2010 is unexcited or when it is fully extended, the double acting control valve 2025 rests respectively in its first closed position 2040 or in its second closed position 2030. In either case, the hydraulic rail pressure maintains injection needle 2070 at a closed position. Thus, the fuel mixture does not enter into the cylinder (not shown). Conversely, when the piezoelectric element 2010 is excited such that double acting control valve 2025 is in the so-called mid-position with respect to the hollow bore 2050, then there is a pressure drop in the pressurized fuel supply line 2060.

This pressure drop results in a pressure differential in the pressurized fuel supply line 2060 between the top and the bottom of the injection needle 2070 so that the injection needle 2070 is lifted allowing for fuel injection into the cylinder (not shown).

German Patent Application Nos. 197 42 073 A1 and DE 197 29 844 A1, which are described below and are incorporated herein by reference in their entirety, disclose piezoelectric elements with double acting, double seat valves for controlling injection needles in a fuel injection system.

Generally, for such applications it is of importance, to achieve predefined quantities of injected fuel. However, in particular with CR systems it is a substantial problem that, when injectors are stuck open, the continuous presence of rail pressure results in continuous injection into the corresponding cylinder. The result is that the quantity of fuel introduced becomes much too great, thus creating an extremely high peak pressure upon combustion. This can lead to massive engine damage after only a few operating cycles.

It has hitherto always been difficult to diagnose stuck injectors. Existing reliability concepts provide for detecting this situation, for example, based on the rail pressure profile (or on deviations from the setpoint). There are limits to such detection, however. A knock sensor, for example could be helpful here, but would increase the costs of the fuel injection system.

Moreover, it would be a general advantage to be able to detect irregular injections of fuel into the fuel injection system without requiring additional expense and space for knock sensors to detect any such irregularities.

An object of the present invention, to provide an improved method and apparatus for diagnosing faults including irregular fuel injections in a system having a piezoelectric element. This can be achieved by claims 1 through 12, i.e., by the method and apparatus claims detailing the use of the piezoelectric elements to both control a valve and/or injector needle and to detect a possible fault such as a stuck injector needle.

In one embodiment, the present invention provides a method for diagnosing a fault in a system having at least two piezoelectric elements. Each of the at least two piezoelectric elements respectively controls a respective device by applying a voltage to each of the least two piezoelectric elements. At least one of the at least two piezoelectric elements is used to detect the fault in the system and transmits a voltage signal greater than a predetermined lower threshold voltage. This method may be used in any applicable system having piezoelectric elements. Preferably, this method of the present invention is used in a fuel injection system. Further, the device controlled by the piezoelectric element is an injector needle.

In an alternative embodiment, the present invention provides a method for diagnosing a fault in a fuel injection system having a first piezoelectric element which controls a first injector needle which provides fuel to the system and having a second piezoelectric elements which controls a second injector needle which provides fuel to the system, where each of the first and second piezoelectric elements are activated when receiving a voltage signal. At time t when each of the piezoelectric elements should received the voltage signal having a value less than a predetermined lower threshold voltage, the first piezoelectric element may receive a first voltage signal, the first voltage signal being greater than the predetermined lower threshold voltage. This indication, the voltage oscillations sensed by the first piezoelectric element at a time t when the voltage of each piezoelectric element should be about less than the lower threshold voltage, or preferably at zero voltage, indicates a potential fault in the second piezoelectric element and/or its respective second injector needle.

A fault diagnosed by the present invention may be an indication of a stuck injector needle which is continuing to supply fuel to the system and so that portion of the system continues to oscillate much and generate the voltage signal sent by one of the piezoelectric elements to the detector, such as a microcomputer or other storing/reading/comparing devices. The microcomputer or other storing/reading/comparing devices can receive and analyze a voltage signal sent by any of the piezoelectric elements. The voltage signal may need to be converted by a converter such as an A/D converter before being analyzed by the microcomputer or storing/reading/comparing devices. In particular, an amplitude and/or a frequency analysis of the received voltage signal may be performed by the device(s).

In any of the preceding embodiments, the present invention may provide that lower threshold voltage value(s) and/or upper threshold voltage value(s) be stored by a storing device, such as a computer, so that a comparing device can compare the received and read voltage values from the piezoelectric elements with the lower and/or upper threshold voltage values. A computer or other indication device may indicate to the comparing device whether a voltage should be supplied to the piezoelectric elements, e.g., actuators. If the computer or the indication device indicates that a voltage should be supplied to the piezoelectric elements, then the comparing device may compare the received voltage values, if any, from the piezoelectric elements with the lower threshold voltage to determine whether enough or any voltage is being supplied so that the fuel or other material is supplied, and/or the comparing device may compare the received voltage values from the piezoelectric elements with the higher threshold voltage to determine whether too much fuel or other material is being supplied perhaps to the fuel injection system, for example. If the computer or indication device indicates that a voltage should not be supplied to the piezoelectric elements, then the comparing device may compare the received voltage values, if any, from the piezoelectric elements with the lower threshold voltage to determine whether something causing such vibrations resulting in a voltage signal is being supplied so that a stuck injector, for example, or other fault can be determined. Given the particular situation, upon determination that the received voltage values from the piezoelectric elements are less than or greater than the upper or lower threshold voltage values, a fault such as a stuck injector, for example, can be determined. Thus, when a fault is determined then a computer or alert device can be used to generate a fault alert or otherwise signal to the user

In an alternative embodiment, the present invention provides that instead of using the previously stored lower and upper threshold voltage values, the present invention may use the relative, median or average values of the voltage signals sent by the piezoelectric elements as the comparing voltage value to determine whether a fault such as those and in a method and/or in a device as described herein. That is that before comparing the received voltage values from the piezoelectric elements with any prerecorded value, the receiving and reading device(s) store all of the received voltage values and take the average or median of the values plus a possible additional error compensation voltage value amount and use those values as the prerecorded lower and upper voltage level, depending upon whether the values were recorded when the voltage was being supplied to the piezoelectric elements so that the injector needles would supply the fuel or other material to the system.

In another alternative embodiment, the present invention provides a fuel injection system in which a piezoelectric element drives a valve for closing a pressurized fuel supply line by applying a voltage to the piezoelectric element such that the fuel injection system includes the necessary hardware as depicted in the detailed description, claims and the figures to effect the method according to any of the method embodiments of the present invention.

In an alternative embodiment, the valve controlled by the piezoelectric element or actuator may be a double acting control valve. The piezoelectric element or actuator controlling the valve may control an injector needle which supplies fuel to the fuel injection system.

In mechanical terms, (mechanically preloaded) piezoelectric elements can be similar to spring-mass systems. In particular, if extreme shocks (shaking) occur, as is the case with continuous injection, those systems are caused to vibrate. This vibration of the piezoelectric elements is expressed electrically as a corresponding oscillating voltage. This voltage can be sensed in a control device. In order to only detect exceptional situations such as those corresponding to stuck injectors, the exact voltage is not what is important here; it is sufficient to check whether specific voltage limits are being exceeded. Hence, the utilization of piezoelectric elements as sensors permits detection in particular of the aforesaid fault situation in a highly accurate and inexpensive manner.

Preferably, piezoelectric elements are used as actuators in fuel injection nozzles and the same piezoelectric elements are utilized as sensors.

The present invention allows implementation of the inventive method in existing fuel injection systems without any additional outlay for sensor technology, e.g., a knock sensor. Hence, the inventive method and/or apparatus can be implemented without any substantial additional costs associated therewith.

In a preferred implementation of the inventive method oscillations of voltages across piezoelectric elements due to mechanical vibrations of the piezoelectric elements are measured by measuring means. Then, correlations between the measured voltages (corresponding to the mechanical vibrations of the piezoelectric elements) on the one hand, and the intensity of fuel combustion which caused the mechanical vibration, on the other hand, are utilized by determination means in order to determine a possible fault situation such as a stuck injector supplying unwanted additional fuel or other material to a system. Likewise, the present invention method and/or apparatus can be used to determine and distinguish regular and irregular fuel injections.

This allows an easy and fast working implementation of the inventive method in order to just detect the aforementioned or other similar fault situations.

In an alternative embodiment of the present invention, the amplitude(s) of voltage oscillations above a predetermined voltage threshold, predetermined by the user or other means, can be counted by counting means within a predefined time frame and the fuel injections can be by a determination means considered to be irregular if an applicable count is exceeded. Likewise, the amplitude(s) of the voltage oscillations below a different predetermined voltage threshold can be counted by counting means within a predefined time frame and the fuel injections can be by a determination means considered to be irregular if an applicable count is not met or exceeding. This additional determination can help to check the voltage level resulting from a normal vibration of the system when there is no fault to detect yet in order to have that voltage level as a reference value for when faults do occur in the system.

The present invention further provides that the substantially unloaded piezoelectric elements are utilized as sensors.

In principle, the aforementioned oscillations of piezoelectric elements can occur independently of the presence or absence of charges. However, in the practical case where the elements are charged, such oscillations may interfere with other effects and elements. Hence, the reliability of the present invention may be improved.

Preferably, within the inventive apparatus, actuators in fuel injection nozzles are implemented as piezoelectric elements and sensors are implemented by means of the same piezoelectric elements (claim 9).

This again allows implementation of the invention in existing fuel injection systems without any additional outlay for sensor technology. Hence, the invention can be implemented without any substantial additional costs associated therewith.

The invention will be explained below in more detail with reference to exemplary embodiments, referring to the figures in which:
- Fig. 1: shows a graph illustrating the background and the general approach of the present invention;
- Fig. 2: shows a block diagram of an exemplary embodiment of an arrangement in which the present invention is implemented resp. which can be utilized for an application of the inventive method;
- Fig. 3a: shows a depiction to explain the conditions occurring during a first charging phase (charging switch 220 closed) in the circuit of Fig. 2;
- Fig. 3b: shows a depiction to explain the conditions occurring during a second charging phase (charging switch 220 open again) in the circuit of Fig. 2;
- Fig. 3c: shows a depiction to explain the conditions occurring during a first discharging phase (discharging switch 230 closed) in the circuit of Fig. 2;
- Fig. 3d: shows a depiction to explain the conditions occurring during a second discharging phase (discharging switch 230 open again) in the circuit of Fig. 2;
- Fig. 4: shows a block diagram of components of the activation IC E which is also shown in Fig. 2;
- Fig. 5: shows a depiction of a logic circuit which is eligible to be used with the inventive method;
- Fig. 6: shows a schematic representation of a fuel injection system using a piezoelectric element as an actuator; and
- Fig. 7: shows a block diagram depiction of an embodiment of the present invention.

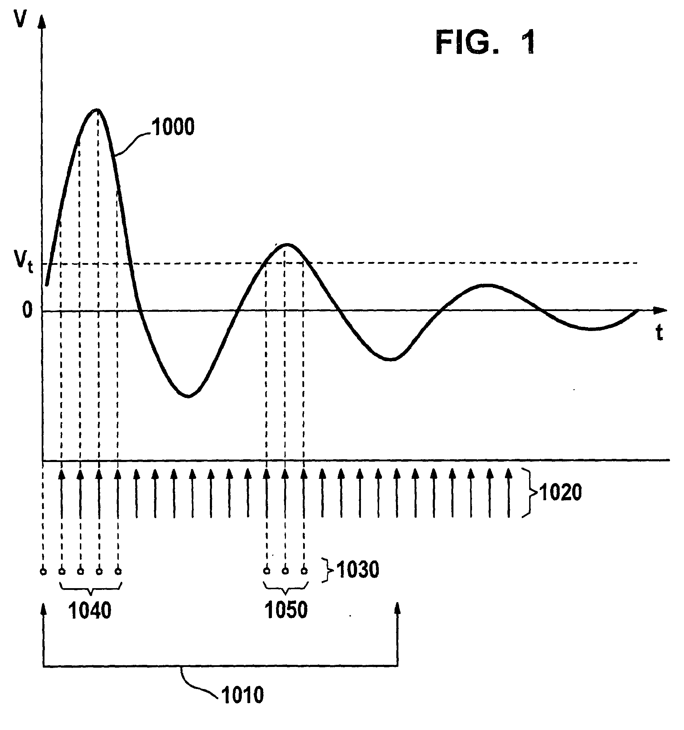

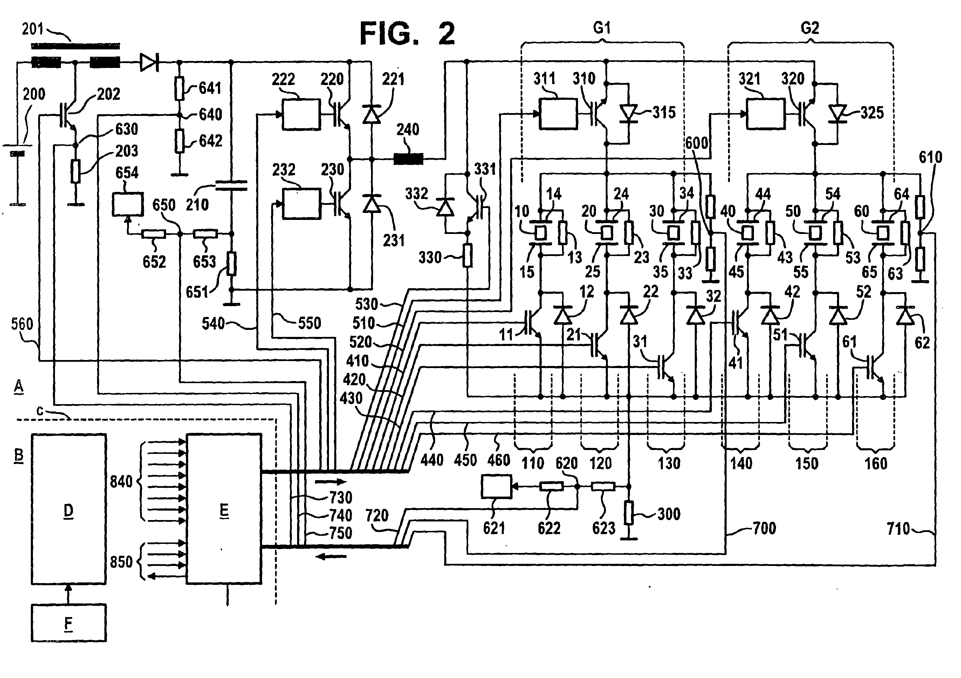

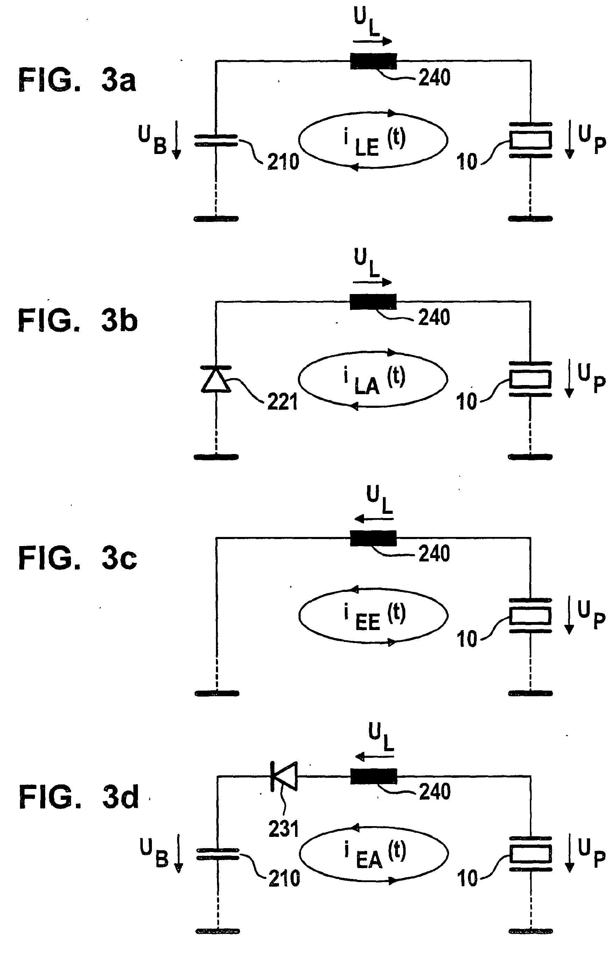

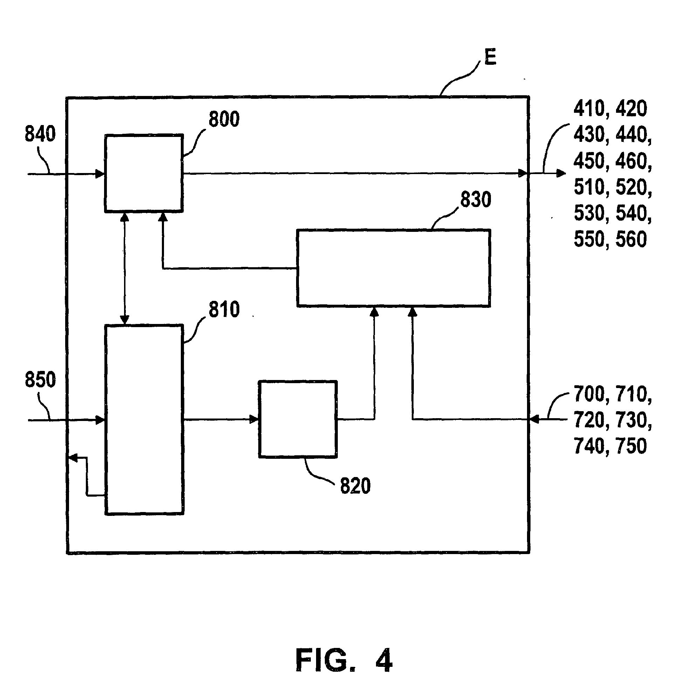

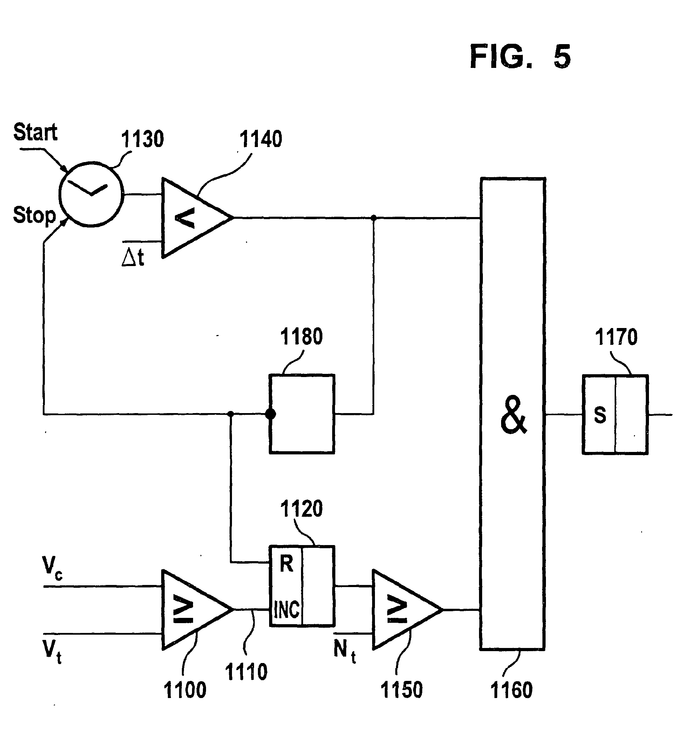

By way of example, the graph in Fig. 1 depicts a vibration of an initially unloaded piezoelectric element. Hence, the voltage across the piezoelectric element oscillates around zero voltage as indicated by curve 1000 (within the depiction of the curve 1000 the voltage is indicated by means of a V-axis and the time by means of a t-axis). In order to allow a better understanding of the meaning of such a vibration, the following description firstly introduces a general environment in which the inventive method and apparatus may be implemented and therefore introduces the individual elements in Fig. 2. Then, the procedures of charging and discharging piezoelectric elements 10, 20, 30, 40, 50, 60 are described in general, additionally referring to Figs. 3a through 3d. Thirdly, the ways both procedures are controlled by means of control unit D and activation IC E are explained in more detail, referring to Figs. 2 and 4. Fourthly, it is pointed out, how the exemplary control system is driven in accordance with the inventive method, further referring to Figs. 1 and 5.

Referring to Fig. 2, there is a detailed area A and a non-detailed area B, the separation of which is indicated by a dashed line C. The detailed area A comprises a circuit for charging and discharging piezoelectric elements 10, 20, 30, 40, 50 and 60. In the example being considered, these piezoelectric elements 10, 20, 30, 40, 50 and 60 are actuators in fuel injection nozzles (in particular in so-called common rail injectors) of an internal combustion engine. Piezoelectric elements can be used for such purposes because, as is known, they possess the property of contracting or expanding as a function of a voltage applied thereto or occurring therein. The non-detailed area B comprises a control unit D and an activation IC E by both of which the elements within the detailed area A are controlled. Further, measuring unit F is connected to control unit D, measuring unit F being capable of acting, inter alia, as a measuring device and/or storing device and/or determining device and/or reading device and/or converting device and/or receiving device and/or comparing device and/or a microcomputer for doing the same or similar tasks.

As mentioned herein, the circuit within the detailed area A comprises six piezoelectric elements 10, 20, 30, 40, 50 and 60. The reason to take six piezoelectric elements 10, 20, 30, 40, 50 and 60 in the embodiment described is to independently control six cylinders within a combustion engine; hence, any other number of piezoelectric elements might match any other purpose.

The piezoelectric elements 10, 20, 30, 40, 50 and 60 are distributed into a first group G1 and a second group G2, each comprising three piezoelectric elements (i.e. piezoelectric elements 10, 20 and 30 in the first group G1 resp. 40, 50 and 60 in the second group G2). Groups G1 and G2 are constituents of circuit parts connected in parallel with one another. Group selector switches 310, 320 can be used to establish which of the groups G1, G2 of piezoelectric elements 10, 20 and 30 resp. 40, 50 and 60 will be discharged in each case by a common charging and discharging apparatus (however, the group selector switches 310, 320 are meaningless for charging procedures, as is explained in further detail below).

The group selector switches 310, 320 are arranged between a coil 240 and the respective groups G1 and G2 (the coil-side terminals thereof) and are implemented as transistors. Side drivers 311, 321 are implemented which transform control signals received from the activation IC E into voltages which are eligible for closing and opening the switches as required.

Diodes 315 and 325 (referred to as group selector diodes), respectively, are provided in parallel with the group selector switches 310, 320. If the group selector switches 310, 320 are implemented as MOSFETs or IGBTs, for example, these group selector diodes 315 and 325 can be constituted by the parasitic diodes themselves. The diodes 315, 325 bypass the group selector switches 310, 320 during charging procedures. Hence, the functionality of the group selector switches 310, 320 is reduced to select a group G1, G2 of piezoelectric elements 10, 20 and 30, resp. 40, 50 and 60 for a discharging procedure only.

Within each group G1 resp. G2 the piezoelectric elements 10, 20 and 30, resp. 40, 50 and 60 are arranged as constituents of piezo branches 110, 120 and 130 (group G1) and 140, 150 and 160 (group G2) that are connected in parallel. Each piezo branch comprises a series circuit made up of a first parallel circuit comprising a piezoelectric element 10, 20, 30, 40, 50 resp. 60 and a resistor 13, 23, 33, 43, 53 resp. 63 (referred to as branch resistors) and a second parallel circuit made up of a selector switch implemented as a transistor 11, 21, 31, 41, 51 resp. 61 (referred to as branch selector switches) and a diode 12, 22, 32, 42, 52 resp. 62 (referred to as branch diodes).

The branch resistors 13, 23, 33, 43, 53 resp. 63 cause each corresponding piezoelectric element 10, 20, 30, 40, 50 resp. 60 during and after a charging procedure to continuously discharge themselves, since they connect both terminals of each capacitive piezoelectric element 10, 20, 30, 40, 50, resp. 60 one to another. However, the branch resistors 13, 23, 33, 43, 53 resp. 63 are sufficiently large to make this procedure slow compared to the controlled charging and discharging procedures as described below. Hence, it is still a reasonable assumption to consider the charge of any piezoelectric element 10, 20, 30, 40, 50 or 60 as unchanging within a relevant time after a charging procedure (the reason to nevertheless implement the branch resistors 13, 23, 33, 43, 53 and 63 is to avoid remaining charges on the piezoelectric elements 10, 20, 30, 40, 50 and 60 in case of a breakdown of the system or other exceptional situations). Hence, the branch resistors 13, 23, 33, 43, 53 and 63 may be neglected in the following description.

The branch selector switch/branch diode pairs in the individual piezo branches 110, 120, 130, 140, 150 resp. 160, i.e. selector switch 11 and diode 12 in piezo branch 110, selector switch 21 and diode 22 in piezo branch 120, and so on, can be implemented using electronic switches (i.e. transistors) with parasitic diodes, for example MOSFETs or IGBTs (as stated above for the group selector switch/diode pairs 310 and 315 resp. 320 and 325).

The branch selector switches 11, 21, 31, 41, 51 resp. 61 can be used to establish which of the piezoelectric elements 10, 20, 30, 40, 50 or 60 will be charged in each case by a common charging and discharging apparatus: in each case, the piezoelectric elements 10, 20, 30, 40, 50 or 60 that are charged are all those whose branch selector switches 11, 21, 31, 41, 51 or 61 are closed during the charging procedure which is described below.

The branch diodes 12, 22, 32, 42, 52 and 62 serve for bypassing the branch selector switches 11, 21, 31, 41, 51 resp. 61 during discharging procedures. Hence, in the example considered for charging procedures any individual piezoelectric element can be selected, whereas for discharging procedures either the first group G1 or the second group G2 of piezoelectric elements 10, 20 and 30 resp. 40, 50 and 60 or both have to be selected.

Returning to the piezoelectric elements 10, 20, 30, 40, 50 and 60 themselves, the branch selector piezo terminals 15, 25, 35, 45, 55 resp. 65 may be connected to ground either through the branch selector switches 11, 21, 31, 41, 51 resp. 61 or through the corresponding diodes 12, 22, 32, 42, 52 resp. 62 and in both cases additionally through resistor 300.

The purpose of resistor 300 is to measure the currents that flow during charging and discharging of the piezoelectric elements 10, 20, 30, 40, 50 and 60 between the branch selector piezo terminals 15, 25, 35, 45, 55 resp. 65 and the ground. A knowledge of these currents allows a controlled charging and discharging of the piezoelectric elements 10, 20, 30, 40, 50 and 60. In particular, by closing and opening charging switch 220 and discharging switch 230 in a manner dependent on the magnitude of the currents, it is possible to set the charging current and discharging current to predefined average values and/or to keep them from exceeding or falling below predefined maximum and/or minimum values as is explained in further detail below.

In the example considered, the measurement itself further requires a voltage source 621 which supplies a voltage of 5 V DC, for example, and a voltage divider implemented as two resistors 622 and 623. This is in order to prevent the activation IC E (by which the measurements are performed) from negative voltages which might otherwise occur on measuring point 620 and which cannot be handled by means of activation IC E: such negative voltages are changed into positive voltages by means of addition with a positive voltage setup which is supplied by said voltage source 621 and voltage divider resistors 622 and 623.

The other terminal of each piezoelectric element 10, 20, 30, 40, 50 and 60, i.e., the group selector piezo terminal 14, 24, 34, 44, 54 resp. 64, may be connected to the plus pole of a voltage source via the group selector switch 310 resp. 320 or via the group selector diode 315 resp. 325 as well as via a coil 240 and a parallel circuit made up of a charging switch 220 and a charging diode 221, and alternatively or additionally connected to ground via the group selector switch 310 resp. 320 or via diode 315 resp. 325 as well as via the coil 240 and a parallel circuit made up of a discharging switch 230 or a discharging diode 231. Charging switch 220 and discharging switch 230 are implemented as transistors which are controlled via side drivers 222 and 232.

The voltage source comprises an element having capacitive properties which, in the example being considered, is the (buffer) capacitor 210. Capacitor 210 is charged by a battery 200 (for example a motor vehicle battery) and a DC voltage converter 201 downstream therefrom. DC voltage converter 201 converts the battery voltage (for example, 12 V) into substantially any other DC voltage (for example, 250 V), and charges capacitor 210 to that voltage. DC voltage converter 201 is controlled by means of transistor switch 202 and resistor 203 which is utilized for current measurements taken from a measuring point 630.

For cross check purposes, a further current measurement at a measuring point 650 is allowed by activation IC E as well as by resistors 651, 652 and 653 and, for example, a 5 V DC voltage source 654; moreover, a voltage measurement at a measuring point 640 is allowed by activation IC E as well as by voltage dividing resistors 641 and 642.

Finally, a resistor 330 (referred to as total discharging resistor), a stop switch implemented as a transistor 331 (referred to as stop switch), and a diode 332 (referred to as total discharging diode) serve to discharge the piezoelectric elements 10, 20, 30, 40, 50 and 60 (if they happen to be not discharged by the "normal" discharging operation as described further below). Stop switch 331 is preferably closed after "normal" discharging procedures (cycled discharging via discharge switch 230). It thereby connects piezoelectric elements 10, 20, 30, 40, 50 and 60 to ground through resistors 330 and 300, and thus removes any residual charges that might remain in piezoelectric elements 10, 20, 30, 40, 50 and 60. The total discharging diode 332 prevents negative voltages from occurring at the piezoelectric elements 10, 20, 30, 40, 50 and 60, which might in some circumstances be damaged thereby.

Charging and discharging of all the piezoelectric elements 10, 20, 30, 40, 50 and 60 or any particular one is accomplished by way of a single charging and discharging apparatus (common to all the groups and their piezoelectric elements). In the example being considered, the common charging and discharging apparatus comprises battery 200, DC voltage converter 201, capacitor 210, charging switch 220 and discharging switch 230, charging diode 221 and discharging diode 231 and coil 240.

The charging and discharging of each piezoelectric element works the same way and is explained in the following while referring to the first piezoelectric element 10 only.

The conditions occurring during the charging and discharging procedures are explained with reference to FIGS. 3a through 3d, of which FIGS. 3a and 3b illustrate the charging of piezoelectric element 10, and FIGS. 3c and 3d the discharging of piezoelectric element 10.

The selection of one or more particular piezoelectric elements 10, 20, 30, 40, 50 or 60 to be charged or discharged, the charging procedure as described in the following as well as the discharging procedure are driven by activation IC E and control unit D by means of opening or closing one or more of the above introduced switches 11, 21, 31, 41, 51, 61; 310, 320; 220, 230 and 331. The interactions between the elements within the detailed area A on the on hand and activation IC E and control unit D on the other hand are described in detail further below.

Concerning the charging procedure, firstly any particular piezoelectric element 10, 20, 30, 40, 50 or 60 which is to be charged has to be selected. In order to exclusively charge the first piezoelectric element 10, the branch selector switch 11 of the first branch 110 is closed, whereas all other branch selector switches 21, 31, 41, 51 and 61 remain opened. In order to exclusively charge any other piezoelectric element 20, 30, 40, 50 and/or 60 or in order to charge several ones at the same time they would be selected by closing the corresponding branch selector switches 21, 31, 41, 51 and/or 61.

Then, the charging procedure itself may take place:

Generally, within the example considered, the charging procedure requires a positive potential difference between capacitor 210 and the group selector piezo terminal 14 of the first piezoelectric element 10. However, as long as charging switch 220 and discharging switch 230 are open no charging or discharging of piezoelectric element 10 occurs: In this state, the circuit shown in Fig. 2 is in a steady-state condition, i.e., piezoelectric element 10 retains its charge state in substantially unchanged fashion, and no currents flow.

In order to charge the first piezoelectric element 10, charging switch 220 is closed. Theoretically, the first piezoelectric element 10 could become charged just by doing so. However, this would produce large currents which might damage the elements involved. Therefore, the occurring currents are measured at measuring point 620 and switch 220 is opened again as soon as the detected currents exceed a certain limit. Hence, in order to achieve any desired charge on the first piezoelectric element 10, charging switch 220 is repeatedly closed and opened whereas discharging switch 230 remains open.

In more detail, when charging switch 220 is closed, the conditions shown in Fig. 3a occur, i.e., a closed circuit comprising a series circuit made up of piezoelectric element 10, capacitor 210, and coil 240 is formed, in which a current i_{LE} (t) flows as indicated by arrows in Fig. 3a. As a result of this current flow both positive charges are brought to the group selector piezo terminal 14 of the first piezoelectric element 10 and energy is stored in coil 240.

When charging switch 220 opens shortly (for example, a few *µ*s) after it has closed, the conditions shown in Fig. 3b occur: a closed circuit comprising a series circuit made up of piezoelectric element 10, charging diode 221, and coil 240 is formed, in which a current i_{LA} (t) flows as indicated by arrows in Fig. 3b. The result of this current flow is that energy stored in coil 240 flows into piezoelectric element 10. Corresponding to the energy delivery to the piezoelectric element 10, the voltage occurring in the latter, and its external dimensions, increase. Once energy transport has taken place from coil 240 to piezoelectric element 10, the steady-state condition of the circuit, as shown in Fig. 2 and already described, is once again attained.

At that time, or earlier, or later (depending on the desired time profile of the charging operation), charging switch 220 is once again closed and opened again, so that the processes described above are repeated. As a result of the re-closing and re-opening of charging switch 220, the energy stored in piezoelectric element 10 increases (the energy already stored in the piezoelectric element 10 and the newly delivered energy are added together), and the voltage occurring at the piezoelectric element 10, and its external dimensions, accordingly increase.

If the aforementioned closing and opening of charging switch 220 are repeated numerous times, the voltage occurring at the piezoelectric element 10, and the expansion of the piezoelectric element 10, rise in steps.

Once charging switch 220 has closed and opened a predefined number of times, and/or once piezoelectric element 10 has reached the desired charge state, charging of the piezoelectric element is terminated by leaving charging switch 220 open.

Concerning the discharging procedure, in the example considered, the piezoelectric elements 10, 20, 30, 40, 50 and 60 are discharged in groups (G1 and/or G2) as follows:

Firstly, the group selector switch(es) 310 and/or 320 of the group or groups G1 and/or G2 the piezoelectric elements of which are to be discharged are closed (the branch selector switches 11, 21, 31, 41, 51, 61 do not affect the selection of piezoelectric elements 10, 20, 30, 40, 50, 60 for the discharging procedure, since in this case they are bypassed by the branch diodes 12, 22, 32, 42, 52 and 62). Hence, in order to discharge piezoelectric element 10 as a part of the first group G1, the first group selector switch 310 is closed.

When discharging switch 230 is closed, the conditions shown in Fig. 3c occur: a closed circuit comprising a series circuit made up of piezoelectric element 10 and coil 240 is formed, in which a current i_{EE}(t) flows as indicated by arrows in Figure 3c. The result of this current flow is that the energy (a portion thereof) stored in the piezoelectric element is transported into coil 240. Corresponding to the energy transfer from piezoelectric element 10 to coil 240, the voltage occurring at the piezoelectric element 10, and its external dimensions, decrease.

When discharging switch 230 opens shortly (for example, a few *µ*s) after it has closed, the conditions shown in Fig. 3d occur: a closed circuit comprising a series circuit made up of piezoelectric element 10, capacitor 210, discharging diode 231, and coil 240 is formed, in which a current i_{EA}(t) flows as indicated by arrows in Fig. 3d. The result of this current flow is that energy stored in coil 240 is fed back into capacitor 210. Once energy transport has taken place from coil 240 to capacitor 210, the steady-state condition of the circuit, as shown in Fig. 2 and already described, is once again attained.

At that time, or earlier, or later (depending on the desired time profile of the discharging operation), discharging switch 230 is once again closed and opened again, so that the processes described above are repeated. As a result of the re-closing and re-opening of discharging switch 230, the energy stored in piezoelectric element 10 decreases further, and the voltage occurring at the piezoelectric element, and its external dimensions, also accordingly decrease.

If the aforementioned closing and opening of discharging switch 230 are repeated numerous times, the voltage occurring at the piezoelectric element 10, and the expansion of the piezoelectric element 10, decrease in steps.

Once discharging switch 230 has closed and opened a predefined number of times, and/or once the piezoelectric element has reached the desired discharge state, discharging of the piezoelectric element 10 is terminated by leaving discharging switch 230 open.

The interaction between activation IC E and control unit D on the one hand and the elements within the detailed area A on the other hand is performed by control signals sent from activation IC E to elements within the detailed area A via branch selector control lines 410, 420, 430, 440, 450, 460, group selector control lines 510, 520, stop switch control line 530, charging switch control line 540 and discharging switch control line 550 and control line 560. On the other hand, there are sensor signals obtained on measuring points 600, 610, 620, 630, 640, 650 within the detailed area A which are transmitted to activation IC E via sensor lines 700, 710, 720, 730, 740, 750.

The control lines are used to apply or not to apply voltages to the transistor bases in order to select piezoelectric elements 10, 20, 30, 40, 50 or 60, to perform charging or discharging procedures of single or several piezoelectric elements 10, 20, 30, 40, 50, 60 by means of opening and closing the corresponding switches as described above. The sensor signals are particularly used to determine the resulting voltage of the piezoelectric elements 10, 20 and 30, resp. 40, 50 and 60 from measuring points 600 resp. 610 and the charging and discharging currents from measuring point 620. The control unit D and the activation IC E are used to combine both kinds of signals in order to perform an interaction of both as will be described in detail now, referring to FIGs. 1 and 3.

As is indicated in FIG. 2, the control unit D and the activation IC E are connected to each other by means of a parallel bus 840 and additionally by means of a serial bus 850. The parallel bus 840 is particularly used for fast transmission of control signals from control unit D to the activation IC E, whereas the serial bus 850 is used for slower data transfer.

In Fig. 4 some components of general significance are indicated, which the activation IC E comprises: a logic circuit 800, RAM memory 810, digital to analog converter system 820 and comparator system 830. Furthermore, it is indicated that the fast parallel bus 840 (used for control signals) is connected to the logic circuit 800 of the activation IC E, whereas the slower serial bus 850 is connected to the RAM memory 810. The logic circuit 800 is connected to the RAM memory 810, to the comparator system 830 and to the signal lines 410, 420, 430, 440, 450 and 460; 510 and 520; 530; 540, 550 and 560. The RAM memory 810 is connected to the logic circuit 800 as well as to the digital to analog converter system 820. The digital to analog converter system 820 is further connected to the comparator system 830. The comparator system 830 is further connected to the sensor lines 700 and 710; 720; 730, 740 and 750 and -as already mentioned- to the logic circuit 800.

The above listed components may be used in a charging procedure for example as follows:

By means of the control unit D a particular piezoelectric element 10, 20, 30, 40, 50 or 60 is determined which is to be charged to a certain target voltage. Then, without the inventive method, for example firstly the value of the target voltage (expressed by a digital number) would be transmitted to the RAM memory 810 via the slower serial bus 850. Later or simultaneously, a code signal corresponding to the particular piezoelectric element 10, 20, 30, 40, 50 or 60 which is to be selected and comprising information about the address of the transmitted voltage within the RAM memory 810 would be transmitted to the logic circuit 800 via the parallel bus 840. Later on, a strobe signal would be sent to the logic circuit 800 via the parallel bus 840 which gives the start signal for the charging procedure.

The start signal firstly causes the logic circuit 800 to pick up the digital value of the target voltage from the RAM memory 810 and to put it on the digital to analog converter system 820 whereby at one analog exit of the converters 820 the desired voltage occurs. Moreover, said analog exit (not shown) is connected to the comparator system 830. In addition hereto, the logic circuit 800 selects either measuring point 600 (for any of the piezoelectric elements 10, 20 or 30 of the first group G1) or measuring point 610 (for any of the piezoelectric elements 40, 50 or 60 of the second group G2) to the comparator system 830. Resulting thereof, the target voltage and the present voltage at the selected piezoelectric element 10, 20, 30, 40, 50 or 60 are compared by the comparator system 830. The results of the comparison, i.e., the differences between the target voltage and the present voltage, are transmitted to the logic circuit 800. Thereby, the logic circuit 800 can stop the procedure as soon as the target voltage and the present voltage are equal to one another.

Secondly, the logic circuit 800 applies a control signal to the branch selector switch 11, 21, 31, 41, 51 or 61 which corresponds to any selected piezoelectric element 10, 20, 30, 40, 50 or 60 so that the switch becomes closed (all branch selector switches 11, 21, 31, 41, 51 and 61 are considered to be in an open state before the onset of the charging procedure within the example described). Then, the logic circuit 800 applies a control signal to the charging switch 220 so that the switch becomes closed. Furthermore, the logic circuit 800 starts (or continues) measuring any currents occurring on measuring point 620. Hereto, the measured currents are compared to any predefined maximum value by the comparator system 830. As soon as the predefined maximum value is achieved by the detected currents, the logic circuit 800 causes the charging switch 220 to open again.

Again, the remaining currents at measuring point 620 are detected and compared to any predefined minimum value. As soon as said predefined minimum value is achieved, the logic circuit 800 causes the branch selector switch 11, 21, 31, 41, 51 or 61 to close again and the procedure starts once again.

The closing and opening of the closing switch 220 is repeated as long as the detected voltage at measuring point 600 or 610 is below the target voltage. As soon as the target voltage is achieved, the logic circuit stops the continuation of the procedure.

The discharging procedure takes place in a corresponding way: Now the selection of the piezoelectric element 10, 20, 30, 40, 50 or 60 is obtained by means of the group selector switches 310 resp. 320, the discharging switch 230 instead of the charging switch 220 is opened and closed and a predefined minimum target voltage is to be achieved.

Thus, in the present invention, for example, when a fault such as an injector needle being stuck in an open position, a correspondingly high level of leakage around the top center point of the corresponding cylinder within the combustion engine can result in shocks, due to sometimes vigorous combustion. The intensity of said shocks can exceed the shaking profile of a correct fuel injection operation or normal combustion event. As described, these shocks are transferred to the piezoelectric elements 10, 20, 30, 40, 50 and 60. These mechanical spring-mass systems thus experience vibrations, which in turn result in a correspondingly oscillating voltage at the piezoelectric element or actuator. The vibrations themselves fundamentally depend on the material constants of the piezoelectric elements 10, 20, 30, 40, 50, 60, which are -as according to the example- usually optimized to act as an actuator and not for a sensor or detector, the time constants and damping of the coupling space between the actuator 10, 20, 30, 40, 50 or 60 and the control valve, the fundamental shaking profile of the engine during normal combustion as well as on external mechanical influences, such as impacts due to poor road conditions, etc.

By way of example, the upper part of the graph in Fig. 1 depicts, a vibration of an initially unloaded piezoelectric element 10, 20, 30, 40, 50 or 60. Hence, the voltage across the piezoelectric element 10, 20, 30, 40, 50 or 60 oscillates around zero voltage as indicated by curve 1000 (within the depiction of the curve 1000 the voltage is indicated by means of a V-axis and the time is indicated by means of a t-axis).

As depicted in Fig. 2, the piezoelectric elements 10, 20 and 30, resp. 40, 50 and 60 are arranged in groups G1, G2, and since the voltages across the elements 10, 20 and 30, resp. 40, 50 and 60 within each group G1 resp. G2 rather than for each individual piezoelectric element 10, 20, 30, 40, 50, 60 are measured from measuring points 600 resp. 610, a corresponding situation is achieved when all piezoelectric elements 10, 20 and 30, resp. 40, 50 and 60 within one group G1 or G2 are unloaded. A corresponding situation occurs numerous times every engine revolution. Hence, the utilization of a piezoelectric element 10, 20, 30, 40, 50 or 60 as a sensor can theoretically be performed at certain times every engine revolution, so that a stuck injector could be detected very promptly.

The amplitudes of the vibration above the zero voltage can be measured by sampling at an appropriate frequency with an A/D converter. The amplitudes above a voltage threshold Vₜ are counted within an analysis window 1010, i.e. a predefined time interval. If an applicable count is exceeded, it is assumed that an "injector stuck open (leakage)" fault is present, as is explained in further detail below.

Fig. 1 further illustrates, how the amplitudes above a voltage threshold Vₜ are counted. Arrows 1020 indicate scanning spots according to which the voltage oscillation is measured. Dots 1030 mark scanning spots on which the voltage threshold Vₜ is exceeded. Hence, in order to count the amplitudes above the voltage threshold Vₜ, either each uninterrupted row of scanning spots on which the voltage threshold Vₜ is exceeded (indicated by reference numbers 1040 and 1050), or -since just the general characteristics of the oscillation may be of interest- each individual corresponding scanning spot is considered to correspond each to one amplitude above the voltage threshold Vₜ. Hence, depending on the selected counting method, in FIG. 1 there are either two or seven counted amplitudes within the analysis window 1010.

An exemplary embodiment of a logic as according to the second counting method is depicted in Fig. 5. Said exemplary logic can be implemented either within the activation IC E or within the control unit D (in the last case measured signals need to be further or additionally transmitted to the control unit D).

Within Fig. 5, each currently scanned voltage V_{c} is applied to a first input of a voltage comparator 1100 and the threshold voltage Vₜ is applied to a second input of the voltage comparator 1100. Hence, the voltage comparator returns a logic TRUE on its exit 1110, whenever a currently scanned voltage V_{c} exceeds (or is equal to) the threshold voltage Vₜ. Each TRUE signal is handed over into a first input INC of a counter 1120 and causes the counter to increment a counting integer by one.

The number counted by the counter 1120 is handed over to a first input of a number comparator 1150. A predefined threshold number Nₜ corresponding to an irregular injection is applied to a second input of the number comparator 1150. The number comparator returns a FALSE as long as the counted number is smaller than the predefined threshold number Nₜ, but it returns a TRUE as soon as the threshold number Nₜ is achieved or exceeded.

In order to only take into account the number of TRUE signals within a predefined analysis window 1010, the following components are implemented in the logic circuit of FIG.5: at the beginning of each counting procedure, a clock 1130 is started from zero by means of a start signal which is sent to a first input of the clock 1130. Digital numbers corresponding to the amount of time which past after the start signal are transmitted to a first input of a time comparator 1140. A digital number corresponding to the analysis window Δt 1010 is transmitted to a second input of the time comparator 1140. As long as the number corresponding to the past time is minor to the number corresponding to the analysis window, the time comparator 1140 returns a TRUE signal at its output. However, as long as there is no procedure started, the time comparator returns a FALSE signal which can be achieved by means of having a number above the analysis window Δt (for example out of a foregoing procedure) applied to the first input of the time comparator 1140. Hence, at the beginning of any new procedure the clock 1130 needs to be reset to zero.

Moreover, both the return signal out of the number comparator 1150 and the return signal out of the time comparator 1140 are handed over to an AND gate 1160. Hence, the truth table of the AND gate 1160 corresponds to the following:
- TRUE out of the time comparator 1140 and TRUE out of the number comparator 1150 corresponds to an irregular injection and results in a TRUE out of the AND gate 1160 which may be transformed into an error signal by a transformation component 1170.
- TRUE out of the time comparator 1140 and FALSE out of the number comparator 1150 corresponds to a regular injection and results in a FALSE out of the AND gate 1160.
- FALSE out of the time comparator 1140 and TRUE out of the number comparator 1150 corresponds to a regular injection (or at least not to an injection which is considered as irregular) and results in a FALSE out of the AND gate 1160.
- FALSE out of the time comparator 1140 and FALSE out of the number comparator corresponds to a regular injection (or at least not to an injection which is considered as irregular), and results in a FALSE out of the AND gate 1160.

Hence, only in case there is a situation which is considered as irregular, an error signal occurs.

Finally, the signal out of the time comparator 1140 is inverted by means of an inverter 1180. Hence, as long as the time comparator returns a TRUE (i.e. as long as the analysis window is not exceeded), there is a FALSE signal returned by the inverter which is applied to a stop input of the clock and a reset input R of the counter 1120. Therefore, neither the clock is stopped nor the counter is reset. On the other hand, as soon as the analysis window is exceeded and therefore the time comparator returns a FALSE, the inverter 1180 returns a TRUE and hence both the clock is stopped and the counter is reset and both are hold at this as long as no further start signal leads to a new counting procedure.

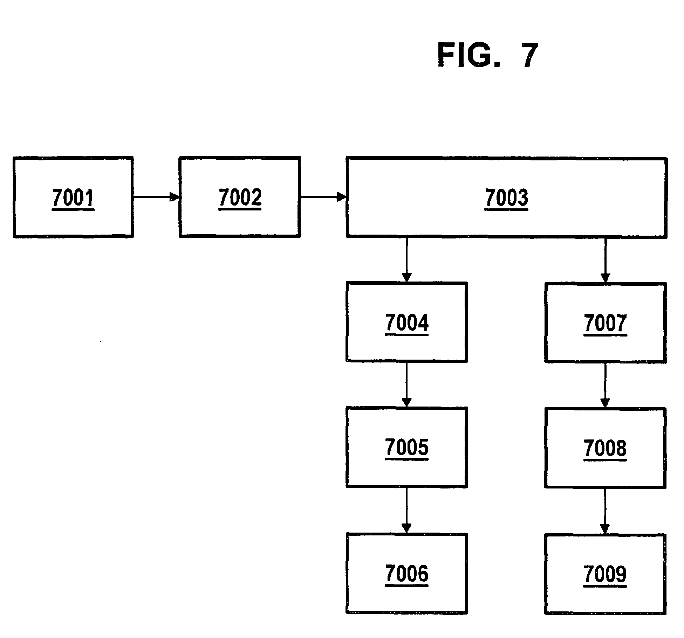

In Fig. 7, a block diagram is shown representing one embodiment method of the present invention. Likewise, a hardware implementation as described above may be used to implement the method and similar variations as shown in Fig. 7.

In a first step 7001, in a fuel injection system, a piezoelectric element controls a valve and an injector needle. A microcomputer is coupled to the fuel injection system so that it can read, store and compare, for example, voltage amplitude and frequency value. The microcomputer is inputted with and stores lower and upper threshold voltage frequency and amplitude values. The microcomputer is also equipped with a means which indicates when a voltage is being applied to the piezoelectric elements. Further, a voltage is applied and activates the piezoelectric element to expand and control the injector needle to be in an open position. A voltage is not applied so that the piezoelectric element contracts and controls the injector needle to be in a closed position.

In a second step 7002, during operation and non-operation of the fuel injection system, voltage signals from each of the piezoelectric elements in the fuel injection system are sent to a microcomputer for analysis.

In a third step 7003, the microcomputer reads and stores the voltage signal amplitude and frequency values from each piezoelectric element.

In a fourth step 7004, the microcomputer reads that a voltage should be applied to the piezoelectric element(s). In a fifth step 7005, the microcomputer compares the voltage signal amplitude and frequency values from each piezoelectric element with the prerecorded lower and upper threshold voltage frequency and amplitude values. In a sixth step 7006, if the microcomputer determines that the signals received from the piezoelectric elements exceeds the upper threshold voltage values or is less than the lower threshold voltage values, then the microcomputer sends an alert signal to a fault detector to indicate possible excessive voltage or too low voltage application to the piezoelectric elements.

In an alternative fourth step 7007 the microcomputer reads that a voltage should not be applied to the piezoelectric element(s). In a following alternative fifth step 7008, the microcomputer compares the voltage signal amplitude and frequency values from each piezoelectric element with the recorded lower threshold voltage frequency and amplitude values. In a following alternative sixth step 7009, if the microcomputer determines that the signals received from the piezoelectric elements exceeds the lower threshold voltage frequency and amplitude values, then the microcomputer sends an alert signal to a fault detector to indicate a fault such as a possible stuck injector.

It is to be understood, that the above described implementation of the inventive method and apparatus serves as example, only. In particular, it is also possible to implement the invention by means of a single (or more ) piezoelectric elements to any other kind of fuel injection system.

## Claims

1. A method for diagnosing a fault in a system having at least two piezoelectric elements, each of the at least two piezoelectric elements respectively controls a respective device by applying a voltage to each of the least two piezoelectric elements,
**characterized in that**
when the at least two piezoelectric elements should control the respective device to be closed, at least one of the at least two piezoelectric elements senses a system vibration and generates a respective return voltage signal to a fault indication device, the fault indication device determining whether voltage signal greater than a predetermined lower threshold voltage.

2. The method according to claim 1,
**characterized in that**
the system is a fuel injection system and the device is an injector needle and that the fault indication device determines whether the respective return voltage signal is greater than a predetermined lower threshold voltage so that if the respective return voltage signal is greater than the predetermined lower threshold voltage the fault indication device generates a fault signal.

3. A method for diagnosing a fault in a fuel injection system having a first piezoelectric element which controls a first injector needle which provides fuel to the fuel injection system and having a second piezoelectric element which controls a second injector needle which provides fuel to the fuel injection system, where each of the first and second piezoelectric elements are activated when receiving a voltage signal,
**characterized in that**
at time t when each of the piezoelectric elements should receive the voltage signal having a value less than a predetermined lower threshold voltage, the first piezoelectric element receives a first voltage signal, the first voltage signal being greater than the predetermined lower threshold voltage, indicating a potential fault in the second piezoelectric element and/or its respective second injector needle.

4. The method according to claims 2 or 3,
**characterized in that**
the first injector needle and/or the second injector needle, being in an open position so that the injector needle, continue to supply fuel to the system when the respective injector needle, the respective at least one of the at least two piezoelectric elements, the first piezoelectric element and/or the second piezoelectric element controlling the respective injector needle, the first injector needle and/or the second injector needle which is in a closed position so that the respective injector needle, the first injector needle and/or the second injector needle, do not supply fuel to the system, generates a respective return voltage signal indicating the fault.

5. The method according to any of the preceding claims,
**characterized in that**
a voltage signal amplitude and/or frequency analysis of the respective return voltage signal generated by the at least two piezoelectric elements, the first piezoelectric element and/or the second piezoelectric element, is determined by a microcomputer.

6. The method according to any of the preceding claims,
**characterized in that**
any of the respective voltage signal values generated from the at least two piezoelectric elements, the first piezoelectric element and/or the second piezoelectric element, is read and/or converted and/or stored and/or compared with the lower threshold voltage, the lower threshold voltage being prerecorded and stored in a storing device, and a determining device determines if the voltage should not be supplied to the at least two piezoelectric elements, the first piezoelectric element and/or the second piezoelectric element, and if a comparing device determines that one or more of the any respective voltage signal values generated by the at least two piezoelectric elements, the first piezoelectric element and/or the second piezoelectric element, is greater in amplitude and/or frequency than the prerecorded lower threshold voltage, then the comparing device generates a fault signal, and if the comparing device determines that one or more of the any respective voltage signal values generated by the at least two piezoelectric elements, the first piezoelectric element and/or the second piezoelectric element, is less in amplitude and/or frequency than the prerecorded lower threshold voltage, then the comparing device does not generate a fault signal.

7. The method according to any of the preceding claims,
**characterized in that**
an A/D converter converts the respective return voltage signal from any of the at least two piezoelectric elements, the first piezoelectric element and/or the second piezoelectric element, so that a frequency and/or and amplitude analysis can be performed.

8. The method according to any of the preceding claims,
**characterized in that**
the lower threshold voltage value and/or the upper threshold voltage value are stored by a storing device, the storing device being preferably at least one microcomputer.

9. The method according to any of the preceding claims,
**characterized in that**
the piezoelectric element is a piezoelectric actuator.

10. A fuel injection system in which a piezoelectric element drives a valve for closing a pressurized fuel supply line by applying a voltage to the piezoelectric element,
**characterized in that**
the fuel injection system includes hardware to effect the method according to any of the preceding claims.

11. The fuel injection system according to any of the preceding claims,
**characterized in that**
the valve performs as a double acting control valve and the piezoelectric element controlling the valve controls an injector needle which supplies fuel to the fuel injection system.

12. A method for diagnosing a fault in a fuel injection system having at least two piezoelectric elements, each of the at least two piezoelectric elements respectively controls a respective fuel injector needle by applying a voltage to each of the least two piezoelectric elements,
**characterized in that**
a storing device coupled to the fuel injection system is inputted with and stores a lower and an upper threshold voltage frequency and amplitude values;
a resulting respective return voltage signal is sent from each of the at least two piezoelectric elements and is received by a receiving device;
when a determining device determines that the voltage should be applied to the at least two piezoelectric elements, a comparing device compares any respective return voltage signal from each of the at least two piezoelectric elements received by the receiving device with the upper threshold voltage frequency and amplitude values stored in the storing device and if the comparing device determines that any of the respective return voltage signal from the at least two piezoelectric elements received from the receiving device is greater than the upper threshold voltage frequency and amplitude values stored in the storing device, the comparing device indicates a fault excessive voltage level alert; and
when the determining device determines that a zero voltage should be applied to the at least two piezoelectric elements, the comparing device compares any respective return voltage signal from each of the at least two piezoelectric elements received by the receiving device with the lower threshold voltage frequency and amplitude values stored in the storing device and if the comparing device determines that any of the respective return voltage signal from the at least two piezoelectric elements received by the receiving device is greater than the lower threshold voltage frequency and amplitude values stored by the storing device, the comparing device indicates a fault stuck injector alert.

13. The method according to claim 12,
**characterized in that**
before the receiving device receives the respective return voltage signal from each of the at least two piezoelectric elements, a converter device converts the respective return voltage signal from each of the at least two piezoelectric elements into a respective return voltage signal amplitude value and a respective return voltage signal frequency value.

14. The method according to any of the preceding claims,
**characterized in that**
the receiving device receives any of the respective return voltage signals continuously, preferably the receiving device receives any of the respective return voltage signals at a predetermined time interval.
